# EUROPEAN PATENT SPECIFICATION

(11) **EP 3 480 075 B1**
(45) Date of publication and mention of the grant of the patent: **29.07.2020**
(21) Application number: 17200295.8
(22) Date of filing: 07.11.2017
(51) Int. Cl.: B60W 40/068, B60W 50/00, G06K 9/00

(54) **A VISION SYSTEM AND METHOD FOR AUTONOMOUS DRIVING AND/OR DRIVER ASSISTANCE IN A MOTOR VEHICLE**
SICHTSYSTEM UND VERFAHREN ZUM AUTONOMEN FAHREN UND/ODER ZUR FAHRERASSISTENZ IN EINEM KRAFTFAHRZEUG
SYSTÈME DE VISION ET PROCÉDÉ POUR ENTRAÎNEMENT AUTONOME ET/OU D'AIDE À LA CONDUITE DANS UN VÉHICULE À MOTEUR

(43) Date of publication of application: 08.05.2019
(73) Proprietor: Veoneer Sweden AB, 447 83 Vårgårda (SE)
(72) Inventor: CRONVALL, Per, 58332 Linköping (SE); ISAKSSON, Markus, 58334 Linköping (SE); NORDSTRÖM, Peter, 587 58 Linköping (SE)
(74) Representative: Müller Verweyen

(56) References cited:
- WO-A1-2017/167583
- DE-A1-102010 053 350
- DE-A1-102013 222 634

## Description

The invention relates to a vision system for a motor vehicle, comprising an imaging apparatus adapted to capture images from a surrounding of the motor vehicle, a data processing device providing a vehicle detector adapted to detect another motor vehicle in the surrounding of the ego vehicle by processing the images captured by the imaging apparatus, and a slip detector adapted to detect a slippery condition of a road ahead of the ego motor vehicle. The invention further relates to a corresponding vision method.

Slippery roads are a common cause for vehicle accidents.

The majority of existing techniques with a slip detector focus on road friction estimation at the vehicle's current position. Methods include using the difference in wheel velocities of driven and non-driven wheels; using optical sensors installed at the front of the car and analyzing reflections from the road surface; acoustic sensors listing to tire noise; sensors included in the tires.

Other methods use a forward looking camera, typically with polarization filters or an infrared sensor, in order to be able to detect water and ice puddles on the road ahead. However, directly estimating the condition of the road surface ahead of the vehicle by optical means is generally very difficult, especially under poor light conditions. In order to get a good performance, these solutions require more expensive sensors than a regular camera.

US 2015/0251659 A1 discloses a method and an apparatus for estimating the friction coefficient of a moving vehicle. A camera is directed towards the front of the vehicle. From images taken by a camera a friction coefficient of the road surface ahead of the vehicle is estimated. The camera estimated friction coefficient is complemented by a friction coefficient which is estimated from the wheel dynamics. Both the camera estimated friction coefficient and the wheel estimated friction coefficient are used to minimize the risk of misinterpretations.

WO 2017/167583 A1 discloses a vision system for a motor vehicle according to the preamble of claim 1.

DE 10 2013 222 634 A1 and DE 10 2010 053 350 A1 disclose further vision systems for a motor vehicle.

The object of the invention is to provide a cost-effective vision system allowing a reliable estimation of a slippery road ahead of the motor vehicle.

The invention solves this object with the features of the independent claims.

The invention suggests that the vision system comprises a vehicle motion estimator and a trajectory predictor, wherein the motion estimator is adapted to estimate an estimated motion of the other motor vehicle based on the output of the vehicle detector, and the trajectory predictor is adapted to predict a normal condition trajectory of the other motor vehicle based on captured images, output of the vehicle detector and/or auxiliary information, wherein the slip detector detects a slippery condition of the road on the basis of a comparison between the output of the motion estimator and the output of the trajectory predictor.

According to the invention the slip detector comprises a motion estimator and a trajectory predictor and makes use of the vehicle detector. The vehicle motion estimator is adapted to estimate the true, factual motion of the other motor vehicle based on the output of the vehicle detector. The trajectory predictor is adapted to predict a normal condition trajectory of the other motor vehicle based on captured images, output of the vehicle detector and/or auxiliary information. The normal condition trajectory is a reasonable prediction of the future path of the other motor vehicle under the assumption that the road is not, or not significantly, slippery. In other words, a normal condition is a road condition which is not, or not significantly, slippery.

The slip detector detects the slippery condition of the road on the basis of a comparison between the output of the motion estimator and the output of the trajectory predictor. If the estimated motion and the normal condition trajectory significantly differ, the slip detector concludes that the road portion ahead the ego motor vehicle where the other motor vehicle is located is significantly slippery. i.e. it has a low friction coefficient. A deviation of the estimated motion from the normal condition trajectory could indicate a dangerous situation and could trigger predefined action of a safety device.

The invention starts from the following observation. When a car is driving straight on a flat surface, the center of gravity will move in the same direction as the orientation of the vehicle. When turning, the car will exhibit a lateral velocity, causing the direction of travel to be different from the vehicle orientation. The difference between the direction of travel and the vehicle orientation defines the side slip angle which relates to a road friction coefficient. The invention could be regarded as a way of indirectly determining the side-slip angle of the other motor vehicle, even if it is too small to be directly visually detectable with confidence.

The invention has realized that it is advantageous to take into account the movement of another vehicle and/or the shape of the road ahead of the ego vehicle. By analyzing the movement of the other motor vehicle combined with road information, a reliable estimation or prediction is possible. The monitoring of the other motor vehicle allows a far-ranged assessment of the road condition ahead of the vehicle without the need of any highly specialized sensors or equipment.

Advantageously, the vision system comprises a road detection unit adapted to determine road information by processing the images captured by the imaging apparatus, wherein the auxiliary information comprises road information output by the road detector. The road detection unit is preferably adapted to detect information from the road that could be relevant for driving the vehicle. Relevant information preferably comprises road surface markings, e.g., road edges, lane markings, pavement markers, pedestrian crossings, and/or other relevant road surface markings, as well as for example traffic signs. The auxiliary information can comprise the information from the road output by the road detection unit in order to allow a reliable prediction of the normal condition trajectory which typically follows the road.

In a preferred embodiment, the road detection unit comprises a road edge detector adapted to determine road edges by processing the images captured by the imaging apparatus, wherein the auxiliary information comprises road edges output by the road edge detector. The road edges limit the road physically and prescribe a drivable portion of the surrounding. The normal condition trajectory typically follows the road edges.

Preferably, the road detection unit comprises a lane detector adapted to determine road lanes by processing the images captured by the imaging apparatus, wherein the auxiliary information comprises road lanes output by the lane detector. The lane detector is preferably adapted to detect the lane of the road on which the ego motor vehicle is driving, in order to predict a normal condition trajectory which typically follows the lanes on the road.

The normal condition trajectory will relate to road edges and/or lane markings, but not strictly follow it since most drivers also not strictly follow lanes but "cut corners" instead.

In a preferred embodiment, the vision system comprises an ego motion estimator adapted to determine motion characteristics of the ego vehicle, wherein the auxiliary information comprises motion characteristics of the ego vehicle output by the ego motion estimator. Such motion characteristics of the ego motor vehicle are, in particular, the position, orientation (yaw, pitch, and/or roll angle), and/or motion dynamics (speed, acceleration, yaw rate, pitch rate, and/or roll rate) of the ego vehicle. It has been found out that compensation for the motion of the ego vehicle motion is advantageous for predicting the normal condition trajectory of another motor vehicle.

Advantageously, the output of the vehicle detector comprises information about the position, orientation, and/or motion of the other motor vehicle to reliably estimate and predict the motion of the other motor vehicle. Such motion characteristics of the other motor vehicle are, in particular, the position, orientation (yaw, pitch, and/or roll angle), and/or motion dynamics (speed, acceleration, yaw rate, pitch rate, and/or roll rate) of the other vehicle. The estimated motion is preferably estimated based on the dynamics of the other car, preferably irrespective of the other vehicle's surrounding.

Advantageously, the vehicle detector is adapted to detect at least one further vehicle (third vehicle, fourth vehicle etc.) in the surrounding of the ego vehicle, in addition to the other vehicle, by processing the images captured by the imaging apparatus, wherein the auxiliary information comprises further vehicle information output by the vehicle detector. The further vehicle information output by the vehicle detector can be used to assess the design and lay-out of the road ahead of the ego vehicle more precisely by detecting at least one further motor vehicle. The more vehicles are detected, the more reliable the auxiliary information may be. Advantageously, the vehicle detector can be designed to determine the same information regarding the further vehicle and/or a plurality thereof.

Preferably, the vehicle detector calculates the information about the position, orientation, and/or motion of the other motor vehicle by using feature point tracking, extended Kalman filters, recurrent convolutional neural networks, and/or machine learning approaches in order to yield reliable results by effective computations.

Advantageously, the slip detector estimates the side slip angle α of the other motor vehicle as the angle between the velocity vector of the center of gravity of other motor vehicle and longitudinal vehicle axis of the other motor vehicle. The side slip angle is an important index for the road condition.

In a preferred embodiment, the slip detector determines a slippery condition of the road if the side slip angle α is larger than a predefined angle *β*, wherein *β* is preferably in the range of 2° and 100°, more preferably in the range between 2° and 40°, even more preferably in the range between 2° and 10°. Under normal circumstances, the side slip angle will be small, typically less than for example 2°. A side slip angle greater than *β* indicates potential dangerous driving conditions and a potential loss of traction. In this embodiment, it is realized that a large slip angle can be used to detect a loss of traction.

Preferably, the vision system comprises a decision logic, and the vision system is in communication with a safety device of the ego motor vehicle, wherein the decision logic is adapted to cause a preventive or mitigating action by the safety device if the slip detector determines a slippery condition. The decision logic is preferably adapted to receive the results of the slip detector and/or the side slip angle and schedules, triggers, controls, adjusts and/or causes the ego vehicle's safety device to perform an action based on the results of the slip detector and/or the side slip angle.

Advantageously, the decision logic controls one or more of the following preventive or mitigating action: adjusting the vehicle stability and/or brake control system; adjusting speed and/or trajectory to avoid loss of vehicle control; adjusting speed and/or trajectory to avoid collision with other vehicles; tightening seat belts; warning the driver; warning other vehicles. This ensures safe driving of the ego vehicle and/or warns other vehicles or traffic participants. In other embodiment further preventive or mitigating action is possible.

In the following the invention shall be illustrated on the basis of preferred embodiments with reference to the accompanying drawings, wherein:

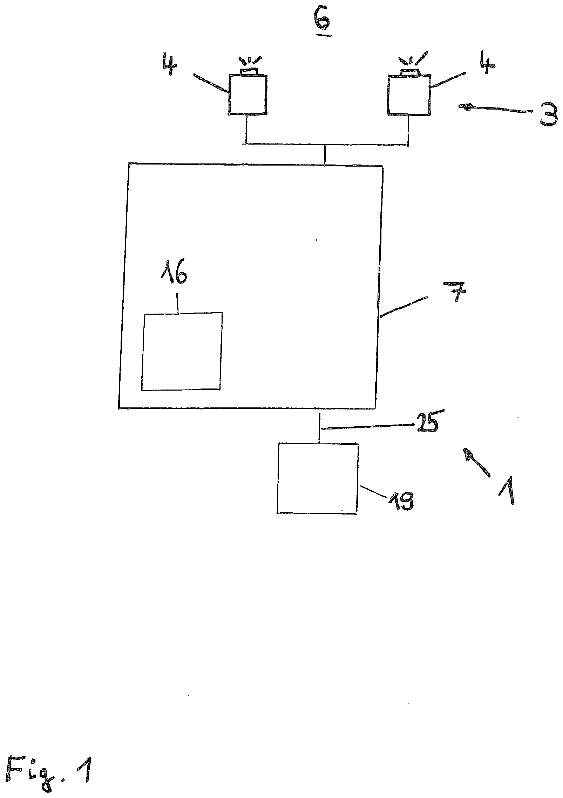

- Fig. 1: shows a schematic diagram of a vision system according to the present invention;
- Fig. 2: shows a schematic view of a road with an ego motor vehicle and a other motor vehicle; and
- Figs. 3, 4: show schematic flow diagrams for illustrating embodiments of the present invention.

The vision system 1 is mounted in and/or on an ego motor vehicle 2 and comprises an imaging apparatus 3 for capturing images 5 of a region surrounding 6 the ego motor vehicle 2, for example a region in front of the ego motor vehicle 2. The imaging apparatus 3 is typically directed forward, which typically is the principal locomotion direction of the ego motor vehicle 2.

Preferably the imaging apparatus 3 comprises one or more optical imaging devices 4, in particular cameras, preferably operating in the visible and/or infrared wavelength range, where infrared covers near IR with wavelengths below 5 microns and/or far IR with wavelengths beyond 5 microns. In some embodiments the imaging apparatus 3 comprises a plurality imaging devices 4 in particular forming a stereo imaging apparatus 3. In other embodiments only one imaging device 4 forming a mono imaging apparatus 3 can be used.

The imaging apparatus 3 is coupled to a data processing device 7 adapted to process the image data received from the imaging apparatus 3. The data processing device 7 is preferably a digital device which is programmed or programmable and preferably comprises a microprocessor, microcontroller, digital signal processor (DSP), and/or a microprocessor part in a System-On-Chip (SoC) device.

The data processing device 7 preferably has access to, or comprises, a data memory 16 to store a sequence of images 5 and/or data about the ego motor vehicle 2 and/or vehicles in the surrounding 6. A sequence of images 5 is preferably used by a vehicle detector 14 to track and/or detect another motor vehicle 13 in the surrounding of the ego motor vehicle 2 and to extract vehicle information 30 of at least one tracked and/or detected vehicle.

The data processing device 7 may comprise a dedicated hardware device, like a Field Programmable Gate Array (FPGA), a central processing unit (CPU), a graphics processing unit (GPU) and/or an Application Specific Integrated Circuit (ASIC), or an FPGA and/or ASIC part in a System-On-Chip (SoC) device, for performing certain functions, for example controlling the capture of images 5 by the imaging apparatus 3, receiving the electrical signal containing the image information from the imaging apparatus 3, rectifying or warping pairs of left/right images 5 into alignment and/or creating disparity or depth images 5. The data processing device 7, or part of its functions, can be realized by a System-On-Chip (SoC) device comprising, for example, FPGA, CPU, GPU, DSP, ARM and/or microprocessor functionality. The data processing device 7 and the memory device 16 are preferably realized in an on-board electronic control unit (ECU) and may be connected to the imaging apparatus 3 via a separate cable or a vehicle data bus. In another embodiment the ECU and one or more of the imaging devices 4 can be integrated into a single unit, where a one box solution including the ECU and all imaging devices 4 can be preferred. All steps from imaging, image processing to possible activation, communication with, and/or control of a safety device 19 are preferably performed automatically and continuously during driving in real time.

Image and data processing carried out in the processing device 7 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 19 depending on an estimation performed with respect to a tracked object, for example on an estimated collision probability.

The data processing device 7 is advantageously adapted to activate, communicate with, adjust and/or control at least one safety device 19 through a control signal 25 in order to cause a corresponding action. The safety device 19 may comprise at least one active safety device and/or at least one passive safety device. In particular, the safety device 19 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the ego vehicle 2 is an autonomous vehicle adapted to drive partly or fully autonomously or automatically, and driving actions of the driver are partially and/or completely replaced or executed by the ego vehicle 2.

Possible actions based on the output 25 of the decision logic may for example comprise one or more of: adjustment of electronic stability and/or brake control systems; adjustment of speed and/or trajectory to avoid loss of vehicle control; adjustment of speed and/or trajectory to avoid collision with other vehicles and/or obstacles; tighten seat-belts, warning of other vehicles and/or traffic participants by activating emergency lights.

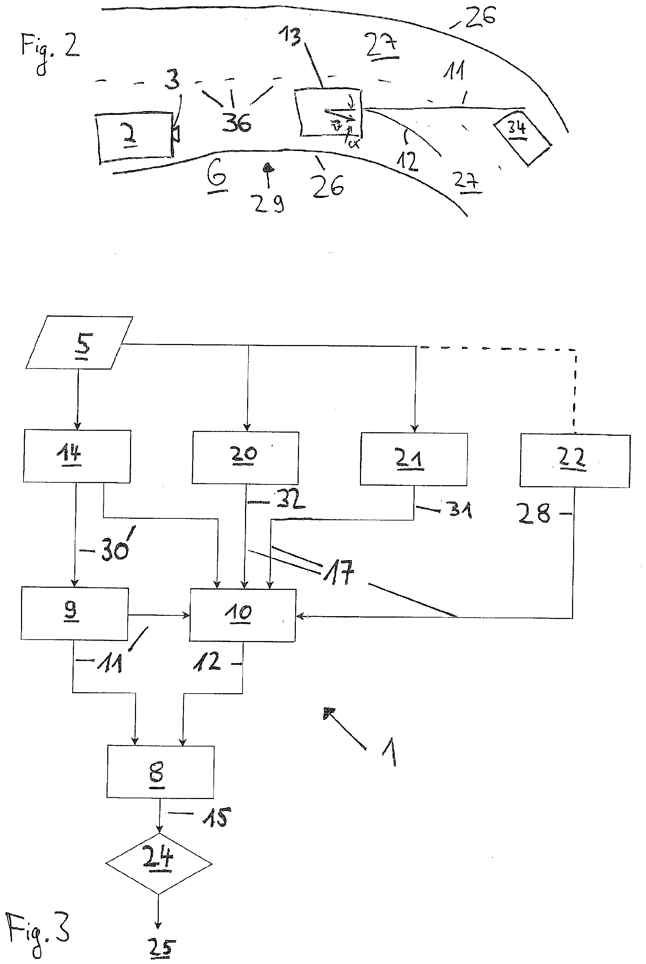

Figure 2 shows a schematic view of a road 29 showing the ego motor 2 vehicle, the other motor vehicle 13 and a further motor vehicle 34. The road 29 comprises two lanes 27 marked by corresponding lane markings 36 and road edges 26 which could be marked by road edge markings or be determinable in other ways. The invention is applicable to an arbitrary number of lanes 27, in particular one lane or more than two lanes 27.

The imaging apparatus 3 takes images 5 of the surrounding 6, wherein the other motor vehicle 13 is potentially in the field of view of the imaging apparatus 3 and thus visible in the image 5. Also the at least one further motor vehicle 34 is potentially in the field of view of the imaging apparatus 3 and thus visible in the image 5.

In this schematic, the other motor vehicle 13 is ahead of the ego motor vehicle 2 and drives in the same direction as the ego motor vehicle 2. It is also possible that the vehicle detector 14 detects and/or tracks a motor vehicle that is driving in the opposite direction towards the ego motor vehicle 2, or in any other direction.

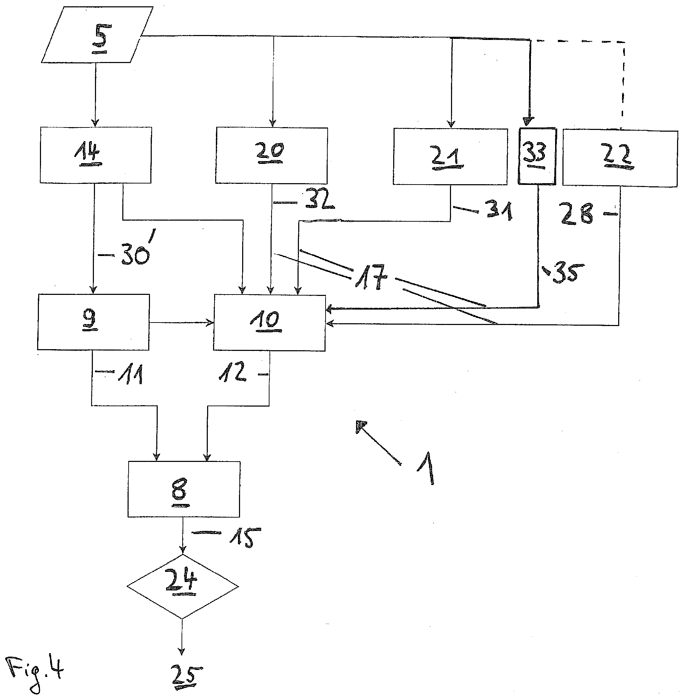

In the following, one embodiment of the invention is described using the flow diagram shown in Figure 3. Herein, images 5 taken by the imaging apparatus 3 are processed in the data processing device 7, i.e., all steps of the image processing from input of the images 5 to output of the result 25 downstream in Figures 3 and 4 are performed in the data processing device 7.

The software in the data processing device 7 comprises a plurality of software modules, namely a vehicle detector 14, a unit 20, 21, 22 for generating auxiliary information 17, a motion estimator 9, a trajectory predictor 10, a slip detector 8 and a decision logic 24.

The vehicle detector 14 receives as input the images 5 captured by the imaging apparatus 3, determines another vehicle 13 in the surrounding of the ego motor vehicle 2 by image processing of the images 5, and outputs vehicle information 30 about any determined other vehicle.

Optionally, the vehicle detector 14 outputs information which comprises further vehicle information about at least one further vehicle 34. For example, at least one additional (third, forth, ...) motor vehicle 34 could be detected and/or tracked to increase the reliability of the information that is computed by the vision system 1.

The vehicle motion estimator 9 receives as input the vehicle information 30 output by the vehicle detector 14 for a plurality of consecutive image frames, estimates the motion of the other motor vehicle 13 from the vehicle information 30, and outputs corresponding vehicle motion information 11. Preferably, the motion information 11 comprises information about the position, orientation (yaw angle, pitch angle, roll angle), and/or motion dynamics (speed, acceleration, yaw rate, pitch rate, roll rate) of the other motor vehicle 13, as determined by the vehicle motion estimator 9. The vehicle motion estimator 9 may use image 5 information. For example, feature point tracking to estimate movement requires image data. The vehicle motion estimator 9 can not only estimate current position and movement but also can be in communication with a memory to estimate an entire trajectory describing the time evolution of the motion of the other motor vehicle 13. The estimated motion information 11 can be estimated using common computer vision techniques, such as feature point tracking and extended Kalman filters, and/or machine learning approaches, such as recurrent convolutional neuronal networks. The estimated motion 11 is based on the dynamics of the other motor vehicle 13, i.e., the vehicle information 14 without involving the surrounding 6.

The auxiliary information generation unit 20, 21, 22 preferably comprises a lane detector 20, a road detector 21, and/or an ego motion estimator 22. Generally, the auxiliary information 17 can be acquired on the basis of primary input from the imaging apparatus 3 and/or by other sensors, such as accelerometers or a positioning device being part of a satellite navigation system. The lane detector 20 and the road detector 21 can be comprised in a road detection unit 20, 21.

The lane detector 20 receives as input the images 5 captured by the imaging apparatus 3, determines lane markings 36 of the road 29 ahead of the ego vehicle 2 by image processing of the input images 5, and outputs lane information 32 corresponding to the lanes 27.

The road detector 21 receives as input the images 5 captured by the imaging apparatus 3, determines road edges 26 of the road 29 ahead of the ego vehicle 2 by image processing of the input images 5, and outputs road edge information 31 corresponding to the road edges 26.

The ego motion estimator 22 determines and outputs ego motion characteristics 28. The ego motion estimator 22 can be realized by sensors within the car and/or by a positioning device being part of a satellite navigation system. The ego motion estimator 22 may perform the estimation of the ego motion characteristics 28 using image 5 data for example by visual odometry based on a sequence of images 5. This is indicated in Figures 3 and 4 by a dashed line. The ego motion characteristics 28 of the ego motor vehicle 2 can be used to provide additional trajectory cues. Additionally, the motion characteristics of at least one other vehicle can be used to provide additional information and/or trajectory cues.

The trajectory predictor 10 receives as input information from the vehicle detector 14, the auxiliary information generation unit 20, 21, 22, and from the motion estimator 9. On the basis of this information 17, 30, the trajectory predictor 10 predicts a normal condition trajectory 12 of the other motor vehicle 13. An expected normal condition trajectory 12 can be predicted by fusing the estimated motion information 11 of the other vehicle 13, as received from the vehicle motion estimator 9, with the auxiliary information 17. Predicted trajectory information 12 about the determined normal condition trajectory is output by the trajectory predictor 10 to the slip detector 8. It is advantageous to use image 5 data for the normal condition trajectory predictor 10. The normal condition trajectory predictor 10 can get input from, or comprise, a holistic path prediction function that takes the entire image 5 into account and estimates a possible path of the ego vehicle 2. The normal condition trajectory predictor 10 can also use the entire image and/or auxiliary information 17 to estimate a possible path of the detected other vehicle 13. For example, the normal condition trajectory predictor 10 could be a deep neural network that directly estimates an expected normal condition trajectory 12.

The slip detector 8 receives as input information from the motion estimator 9 and the normal condition trajectory predictor 10, and makes a final estimate of the slip probability by combining and/or comparing the information from the motion estimator 9 and the trajectory predictor 10. Preferably, the slip detector 8 is a classifier adapted to classify the road condition into one of a plurality of predetermined road conditions. In the simplest case, the slip detector 8 is adapted to classify the road condition into "slippery road" or "non-slippery road". More than two road condition types, involving intermediate levels of slipperiness, are possible. The slip detector 8 may also use image 5 data.

The difference between velocity v of the center of gravity of the other motor vehicle 13 and the longitudinal vehicle axis of the other motor vehicle defines the side slip angle *α* shown schematically in Figure 2. The estimated motion 11 reflects the actual motion based on the dynamics of the other motor vehicle 13 and potentially deviates from the normal condition trajectory 12, e.g., along the lane 27 and/or the road edge 26. Therefore, the slip detector can be said to detect a loss of vehicle control by comparing the normal condition trajectory 12 with the estimated motion 11 of the other motor vehicle 13. Generally, a discrepancy between the estimated motion 11 and the normal condition trajectory 12 is used in the slip detector 8 to infer a slippery condition of the road 29.

The slip detector 8 is preferably a classifier, more preferably based on machine learning techniques, that combines information from different trajectories, e.g., the estimated motion 11 and the normal condition trajectory 12, in a complex way. The slip detector 8 is not limited to computing the difference angle between two distinct vectors describing the motion of the other vehicle 13.

The determined slip probability estimate is forward to a decision logic adapted to cause a preventive or mitigating action 25 by the safety device 19 if the slip detector 8 has determined a slippery road condition. In other words, the decision logic 24 analyses the results 15 of the slip detector 8. If the analysis of the decision logic 24 indicates that the road 29 ahead of the ego motor vehicle 2 is slippery the vision system 1 will cause a preventive or mitigating action 25 by the safety device 19.

The following illustrates the working principle of the slip detector 8 in a simple situation. For example, if the motion of a motor vehicle 13 ahead of the ego vehicle 2, as determined by the vehicle motion detector 9, deviates from the path indicated by the road lanes 27 and/or the road edges 26, as predicted by the trajectory predictor 10, it may be concluded that the other vehicle 13 drives on a slippery road portion.

In the embodiment of Figure 4, the vision system 1 comprises a further vehicle detector 33 separate from the vehicle detector 14 and adapted to receive as input the images 5 captured by the imaging apparatus 3, determine the further vehicle 34 in the surrounding of the ego motor vehicle 2 by image processing of the images 5, and output further vehicle information 35 about the determined further vehicle 34. The further vehicle detector 33 operates analogous to the vehicle detector 14. The further vehicle information 35 is comprised by the auxiliary information 17 and used by the normal condition trajectory predictor 10 to increase its reliability by using the additional information about the further vehicle 34.

In the embodiment of Figure 3, the further vehicle detector 33 is dispensed with and the further vehicle 34 is determined by the vehicle detector 14 analogous to the other vehicle 13.

## Claims

1. A vision system (1) for an ego motor vehicle (2), comprising
- an imaging apparatus (3) adapted to capture images (5) from a surrounding (6) of the ego motor vehicle (2), and
- a data processing device (7) providing
-- a vehicle detector (14) adapted to detect another motor vehicle (13) in the surrounding (6) of the ego vehicle (2) by processing the images (5) captured by the imaging apparatus (3), and
-- a slip detector (8) adapted to detect a slippery condition of a road (29) ahead of the ego motor vehicle (2), **characterized in that**
- the vision system (1) comprises a vehicle motion estimator (9) and a trajectory predictor (10), wherein
- the vehicle motion estimator (9) is adapted to estimate the motion of the other motor vehicle (13) based on the output (30) of the vehicle detector (14), and
- the trajectory predictor (10) is adapted to predict a normal condition trajectory (12) of the other motor vehicle (13) based on captured images (5), output (30) of the vehicle detector (14) and/or auxiliary information (17), wherein a normal condition trajectory is a trajectory under the assumption that the road is not, or not significantly, slippery;
- the slip detector (8) detects a slippery condition of the road (29) on the basis of a comparison between the output (11) of the vehicle motion estimator (9) and the output (12) of the trajectory predictor (10).

2. The vision system according to claim 1, **characterized in that** the vision system (1) comprises a road detection unit (20, 21) adapted to determine road information (31, 32) by processing the images (5) captured by the imaging apparatus (3), wherein the auxiliary information (17) comprises road information (31, 32) output by the road detector (21).

3. The vision system according to claim 2, **characterized in that** the road detection unit (20, 21) comprises a road edge detector (21) adapted to determine road edges (31) by processing the images (5) captured by the imaging apparatus (3), wherein the auxiliary information (17) comprises road edges (31) output by the road edge detector (21) .

4. The vision system according to claim 2 or 3, **characterized in that** the road detection unit (20, 21) comprises a lane detector (20) adapted to determine road lanes (32) by processing the images (5) captured by the imaging apparatus (3), wherein the auxiliary information (17) comprises road lanes (32) output by the lane detector (20).

5. The vision system according to any one of the preceding claims, **characterized in that** the vision system (1) comprises an ego motion estimator (22) adapted to determine motion characteristics (28) of the ego vehicle (2), wherein the auxiliary information (17) comprises motion characteristics (28) of the ego vehicle (2) output by the ego motion estimator (22).

6. The vision system according to any one of the preceding claims, **characterized in that** the output (30) of the vehicle detector (14) comprises information about the position, orientation, and/or motion of the other motor vehicle (13) .

7. The vision system according to any one of the preceding claims, **characterized in that** the vehicle detector (14) is adapted to detect at least one further vehicle (34) in the surrounding (6) of the ego vehicle (2) by processing the images (5) captured by the imaging apparatus (3), wherein the auxiliary information (17) comprises further vehicle information output by the vehicle detector (14).

8. The vision system according to claim 7, **characterized in that** the output (30) of the vehicle detector (14) comprises information about the position, orientation, and/or motion of the further motor vehicle (34).

9. The vision system according to any one of the preceding claims, **characterized in that** the vehicle detector (14) calculates said information about the position, orientation, and/or motion of the other motor vehicle (13) by using feature point tracking, extended Kalman filters, recurrent convolutional neural networks, and/or machine learning approaches.

10. The vision system according to any one of the preceding claims, **characterized in that** the slip detector (8) estimates the side slip angle *α* of the other motor vehicle (13) as the angle between the velocity vector of the center of gravity of other motor vehicle and longitudinal vehicle axis of the other motor vehicle.

11. The vision system as claimed in claim 10, **characterized in that** the slip detector (8) determines a slippery condition of the road (29) if the side slip angle *α* is larger than a predefined angle *β*.

12. The vision system according to any one of the preceding claims, **characterized in that**
- the vision system (1) comprises a decision logic (24), and
- the vision system (1) is in communication with a safety device (19) of the ego motor vehicle (2), wherein
- the decision logic (24) is adapted to cause a preventive or mitigating action (25) by the safety device (19) if the slip detector (8) determines a slippery road condition.

13. The vision system as claimed in claim 12, **characterized in that** the decision logic (24) controls one or more of the following actions (25):
- adjusting the vehicle stability and/or brake control system;
- adjusting speed and/or trajectory to avoid loss of vehicle control;
- adjusting speed and/or trajectory to avoid collision with other vehicles;
- tightening seat belts;
- warning the driver;
- warning other vehicles.

14. The vision system as claimed in any one of the preceding claims, **characterized in that** the slip detector (8) is a slip detector classifier adapted to classify the road condition into one of a plurality of predetermined road conditions.

15. A vision method for an ego motor vehicle (2), comprising
- capturing images (5) from a surrounding (6) of the motor vehicle (2), and
-- detecting, with a vehicle detector (14), another motor vehicle (13) in the surrounding (6) of the ego vehicle (2) by processing the captured images (5), and
-- detecting a slippery condition of a road (29) ahead of the ego motor vehicle (2) by a slip detector (8), **characterized by**
- estimating, with a vehicle motion estimator (9), the motion (11) of the other motor vehicle (13) based on the output (30) of the vehicle detector (14), and
- predicting, with a trajectory predictor (10), a normal condition trajectory (12) of the other motor vehicle (13) based on captured images (5), output (30) of the vehicle detector (14) and/or auxiliary information (17), wherein a normal condition trajectory is a trajectory under the assumption that the road is not, or not significantly, slippery; and
- detecting a slippery condition of the road (29) with the slip detector (8) on the basis of a comparison between the output (11) of the vehicle motion estimator (9) and the output (12) of the trajectory predictor (10).

## Patentansprüche

1. Sichtsystem (1) für ein Ego-Kraftfahrzeug (2), umfassend:
- eine Abbildungsvorrichtung (3), die dafür geeignet ist, Bilder (5) aus einer Umgebung (6) des Ego-Kraftfahrzeugs (2) zu erfassen, und
- ein Datenverarbeitungsgerät (7), das Folgendes bereitstellt:
--einen Fahrzeugdetektor (14), der dafür geeignet ist, ein anderes Kraftfahrzeug (13) in der Umgebung (6) des Ego-Kraftfahrzeugs (2) durch Verarbeiten der Bilder (5) zu erkennen, die von der Abbildungsvorrichtung (3) aufgenommen wurden, und
-- einen Schlupfdetektor (8), der dafür geeignet ist, einen rutschigen Zustand einer Straße (29) vor dem Ego-Kraftfahrzeug (2) zu erkennen, **dadurch gekennzeichnet, dass**
- das Sichtsystem (1) einen Fahrzeugbewegungsschätzer (9) und einen Trajektorienprädiktor (10) umfasst, wobei
- der Fahrzeugbewegungsschätzer (9) dafür geeignet ist, die Bewegung des anderen Kraftfahrzeugs (13) basierend auf der Ausgabe (30) des Fahrzeugdetektors (14) zu schätzen, und
- der Trajektorienprädiktor (10) dafür geeignet ist, eine Normalzustandstrajektorie (12) des anderen Kraftfahrzeugs (13) basierend auf aufgenommenen Bildern (5), der Ausgabe (30) des Fahrzeugdetektors (14) und/oder Zusatzinformationen (17) vorherzusagen, wobei die Normalzustandstrajektorie eine Trajektorie unter der Annahme ist, dass die Straße nicht oder nicht signifikant rutschig ist;
- der Schlupfdetektor (8) einen rutschigen Zustand der Straße (29) basierend auf einem Vergleich zwischen der Ausgabe (11) des Fahrzeugbewegungsschätzers (9) und der Ausgabe (12) des Trajektorienprädiktors (10) erfasst.

2. Sichtsystem nach Anspruch 1, **dadurch gekennzeichnet, dass** das Sichtsystem (1) eine Straßenerkennungseinheit (20, 21) umfasst, die dafür geeignet ist, Straßeninformationen (31, 32) durch Verarbeiten der Bilder (5) zu bestimmen, die von der Abbildungsvorrichtung (3) aufgenommen wurden, wobei die Zusatzinformationen (17) Straßeninformationen (31, 32) umfassen, die von dem Straßendetektor (21) ausgegeben werden.

3. Sichtsystem nach Anspruch 2, **dadurch gekennzeichnet, dass** die Straßenerkennungseinheit (20, 21) einen Straßenranddetektor (21) umfasst, der dafür geeignet ist, Straßenränder (31) durch Verarbeiten der Bilder (5) zu bestimmen, die von der Abbildungsvorrichtung (3) aufgenommen wurden, wobei die Zusatzinformationen (17) Straßenränder (31) umfassen, die von dem Straßenranddetektor (21) ausgegeben werden.

4. Sichtsystem nach Anspruch 2 oder 3, **dadurch gekennzeichnet, dass** die Straßenerkennungseinheit (20, 21) einen Fahrspurdetektor (20) umfasst, der dafür geeignet ist, Fahrspuren (32) durch Verarbeiten der von der Abbildungsvorrichtung (3) aufgenommenen Bilder (5) zu bestimmen, wobei die Zusatzinformationen (17) Fahrspuren (32) umfassen, die von dem Fahrspurdetektor (20) ausgegeben werden.

5. Sichtsystem nach einem der vorhergehenden Ansprüche, **dadurch gekennzeichnet, dass** das Sichtsystem (1) einen Ego-Bewegungsschätzer (22) umfasst, der dafür geeignet ist, Bewegungscharakteristiken (28) des Ego-Kraftfahrzeugs (2) zu bestimmen, wobei die Zusatzinformationen (17) Bewegungscharakteristiken (28) des Ego-Kraftfahrzeugs (2) umfassen, die von dem Ego-Bewegungsschätzer (22) ausgegeben werden.

6. Das Sichtsystem nach einem der vorhergehenden Ansprüche, **dadurch gekennzeichnet, dass** die Ausgabe (30) des Fahrzeugdetektors (14) Informationen über die Position, Orientierung und/oder Bewegung des anderen Kraftfahrzeugs (13) umfasst.

7. Sichtsystem nach einem der vorhergehenden Ansprüche, **dadurch gekennzeichnet, dass** der Fahrzeugdetektor (14) geeignet ist, mindestens ein weiteres Fahrzeug (34) in der Umgebung (6) des Ego-Kraftfahrzeugs (2) durch Verarbeiten der von der Abbildungsvorrichtung (3) aufgenommenen Bilder (5) zu erkennen, wobei die Zusatzinformationen (17) weitere Fahrzeuginformationen umfassen, die vom Fahrzeugdetektor (14) ausgegeben werden.

8. Sichtsystem nach Anspruch 7, **dadurch gekennzeichnet, dass** die Ausgabe (30) des Fahrzeugdetektors (14) Informationen über die Position, Orientierung und/oder Bewegung des weiteren Kraftfahrzeugs (34) umfasst.

9. Sichtsystem nach einem der vorhergehenden Ansprüche, **dadurch gekennzeichnet, dass** der Fahrzeugdetektor (14) die Informationen über die Position, Orientierung und/oder Bewegung des anderen Kraftfahrzeugs (13) unter Verwendung von Merkmalspunktverfolgung, erweiterten Kalman-Filtern, rekurrenten faltungsneuronalen Netzen und/oder maschinellen Lernansätzen berechnet.

10. Sichtsystem nach einem der vorhergehenden Ansprüche, **dadurch gekennzeichnet, daß** der Schlupfdetektor (8) den Seitenschlupfwinkel α des anderen Kraftfahrzeugs (13) als den Winkel zwischen dem Geschwindigkeitsvektor des Schwerpunkts des anderen Kraftfahrzeugs und der Fahrzeuglängsachse des anderen Kraftfahrzeugs schätzt.

11. Sichtsystem nach Anspruch 10, **dadurch gekennzeichnet, dass** der Schlupfdetektor (8) einen rutschigen Zustand der Straße (29) bestimmt, wenn der Seitenschlupfwinkel α größer als ein vordefinierter Winkel β ist.

12. Sichtsystem nach einem der vorhergehenden Ansprüche, **dadurch gekennzeichnet, dass**
- das Sichtsystem (1) eine Entscheidungslogik (24) umfasst, und
- das Sichtsystem (1) mit einer Sicherheitsvorrichtung (19) des Ego-Kraftfahrzeugs (2) in Verbindung steht, wobei
- die Entscheidungslogik (24) dafür geeignet ist, dass sie eine präventive oder mildernde Aktion (25) durch die Sicherheitsvorrichtung (19) auslöst, wenn der Schlupfdetektor (8) einen rutschigen Straßenzustand feststellt.

13. Sichtsystem nach Anspruch 12, **dadurch gekennzeichnet, dass** die Entscheidungslogik (24) eine oder mehrere der folgenden Aktionen (25) steuert:
- Anpassen der Fahrzeugstabilität und/oder des Bremsregelsystems;
- Anpassen von Geschwindigkeit und/oder Trajektorie, um den Verlust der Fahrzeugkontrolle zu vermeiden;
- Anpassen von Geschwindigkeit und/oder Trajektorie, um eine Kollision mit anderen Fahrzeugen zu vermeiden;
- Anziehen der Sicherheitsgurte;
- Warnen des Fahrers;
- Warnen von anderen Fahrzeugen;

14. Sichtsystem nach einem der vorhergehenden Ansprüche, **dadurch gekennzeichnet, dass** der Schlupfdetektor (8) ein Schlupfdetektor-Klassifikator ist, der dafür geeignet ist, den Straßenzustand in einen von mehreren vorbestimmten Straßenzuständen zu klassifizieren.

15. Sichtverfahren für ein Ego-Kraftfahrzeug (2), umfassend:
- das Aufnehmen von Bildern (5) aus der Umgebung (6) des Kraftfahrzeugs (2), und
-- das Erkennen eines anderen Kraftfahrzeugs (13) in der Umgebung (6) des Ego-Kraftfahrzeuges (2) mittels eines Fahrzeugdetektors (14) durch Verarbeiten der aufgenommenen Bilder (5), und
-- das Erkennen eines rutschigen Zustands einer Straße (29) vor dem Ego-Kraftfahrzeug (2) durch einen Schlupfdetektor (8), **gekennzeichnet durch**
- das Schätzen, mittels eines Fahrzeugbewegungsschätzers (9), der Bewegung (11) des anderen Kraftfahrzeugs (13) basierend auf der Ausgabe (30) des Fahrzeugdetektors (14), und
- das Vorhersagen, mittels eines Trajektorienprädiktors (10) einer Normalzustandstrajektorie (12) des anderen Kraftfahrzeugs (13) basierend auf aufgenommenen Bildern (5), der Ausgabe (30) des Fahrzeugdetektors (14) und/oder Zusatzinformationen (17), wobei die Normalzustandstrajektorie eine Trajektorie unter der Annahme ist, dass die Straße nicht oder nicht signifikant rutschig ist; und
- das Erkennen eines rutschigen Zustands der Straße (29) mit dem Schlupfdetektor (8) basierend auf einem Vergleich zwischen der Ausgabe (11) des Fahrzeugbewegungsschätzers (9) und der Ausgabe (12) des Trajektorienprädiktors (10).

## Revendications

1. Un système de vision (1) pour un ego-véhicule à moteur (2), comprenant :
- un appareil imageur (3) conçu pour capturer des images (5) à partir d'un environnement (6) de l'ego-véhicule à moteur (2) et
- un dispositif de traitement de données (7) procurant :
-- un détecteur de véhicule (14) conçu pour détecter un autre véhicule à moteur (13) dans l'environnement (6) de l'ego-véhicule (2) en traitant les images (5) capturées par l'appareil imageur (3), et
-- un détecteur de glissement (8) conçu pour détecter un état glissant d'une route (29) devant l'ego-véhicule à moteur (2), **caractérisé en ce que** :
- le système de vision (1) comprend un estimateur de mouvement de véhicule (9) et un prédicteur de trajectoire (10), dans lequel :
- l'estimateur de mouvement de véhicule (9) est conçu pour estimer le mouvement de l'autre véhicule à moteur (13) sur la base de la sortie (30) du détecteur de véhicule (14), et
- le prédicteur de trajectoire (10) est conçu pour prédire une trajectoire à l'état normal (12) de l'autre véhicule à moteur (13) sur la base des images (5) capturées, de la sortie (30) du détecteur de véhicule (14) et/ou d'informations auxiliaires (17), dans lequel une trajectoire à l'état normal est une trajectoire dans l'hypothèse où la route ne serait pas glissante ou ne le serait pas de façon significative ;
- le détecteur de glissement (8) détecte un état glissant de la route (29) sur la base d'une comparaison entre la sortie (11) de l'estimateur de mouvement de véhicule (9) et la sortie (12) du prédicteur de trajectoire (10).

2. Le système de vision selon la revendication 1, **caractérisé en ce que** le système de vision (1) comprend une unité de détection routière (20, 21) conçue pour déterminer des informations routières (31, 32) en traitant les images (5) capturées par l'appareil imageur (3), dans lequel les informations auxiliaires (17) comprennent les informations routières (31, 32) délivrées par le détecteur routier (21).

3. Le système de vision selon la revendication 2, **caractérisé en ce que** l'unité de détection routière (20, 21) comprend un détecteur de bords de route (21) conçu pour déterminer des bords de route (31) en traitant les images (5) capturées par l'appareil imageur (3), dans lequel les informations auxiliaires (17) comprennent les bords de route (31) délivrés par le détecteur de bords de route (21).

4. Le système de vision selon la revendication 2 ou 3, **caractérisé en ce que** l'unité de détection routière (20, 21) comprend un détecteur de voies (20) conçu pour déterminer des voies routières (32) en traitant les images (5) capturées par l'appareil imageur (3), dans lequel les informations auxiliaires (17) comprennent les voies routières (32) délivrées par le détecteur de voies (20).

5. Le système de vision selon l'une quelconque des revendications précédentes, **caractérisé en ce que** le système de vision (1) comprend un estimateur d'ego-mouvement (22) conçu pour déterminer des caractéristiques de mouvement (28) de l'ego-véhicule (2), dans lequel les informations auxiliaires (17) comprennent les caractéristiques de mouvement (28) de l'ego-véhicule (2) délivrées par l'estimateur d'ego-mouvement (22).

6. Le système de vision selon l'une quelconque des revendications précédentes, **caractérisé en ce que** la sortie (30) du détecteur de véhicule (14) comprend des informations sur la position, l'orientation et/ou le mouvement de l'autre véhicule à moteur (13).

7. Le système de vision selon l'une quelconque des revendications précédentes, **caractérisé en ce que** le détecteur de véhicule (14) est conçu pour détecter au moins un véhicule supplémentaire (34) dans l'environnement (6) de l'ego-véhicule (2) en traitant les images (5) capturées par l'appareil imageur (3), dans lequel les informations auxiliaires (17) comprennent les informations sur le(s) véhicule(s) supplémentaire(s), délivrées par le détecteur de véhicule (14).

8. Le système de vision selon la revendication 7, **caractérisé en ce que** la sortie (30) du détecteur de véhicule (14) comprend des informations sur la position, l'orientation et/ou le mouvement du véhicule à moteur supplémentaire (34).

9. Le système de vision selon l'une quelconque des revendications précédentes, **caractérisé en ce que** le détecteur de véhicule (14) calcule lesdites informations sur la position, l'orientation et/ou le mouvement de l'autre véhicule à moteur (13), en faisant appel au suivi de points caractéristiques, à des filtres de Kalman étendus, à des réseaux neuronaux convolutifs récurrents et/ou à des approches d'apprentissage automatique.

10. Le système de vision selon l'une quelconque des revendications précédentes, **caractérisé en ce que** le détecteur de glissement (8) estime l'angle de glissement latéral α de l'autre véhicule à moteur (13) comme étant l'angle entre le vecteur de vitesse du centre de gravité de l'autre véhicule à moteur et l'axe longitudinal de véhicule de l'autre véhicule à moteur.

11. Le système de vision, tel que revendiqué dans la revendication 10, **caractérisé en ce que** le détecteur de glissement (8) détermine un état glissant de la route (29) si l'angle de glissement latéral α est supérieur à un angle prédéfini β.

12. Le système de vision selon l'une quelconque des revendications précédentes, **caractérisé en ce que** :
- le système de vision (1) comprend une logique de décision (24), et
- le système de vision (1) est en communication avec un dispositif de sécurité (19) de l'ego-véhicule à moteur (2), dans lequel :
- la logique de décision (24) est conçue pour provoquer une action de prévention ou d'atténuation (25) au moyen du dispositif de sécurité (19) si le détecteur de glissement (8) détermine un état glissant de la route.

13. Le système de vision selon la revendication 12, **caractérisé en ce que** la logique de décision (24) commande une ou plusieurs des actions suivantes (25) :
- régler la stabilité du véhicule et/ou le système de commande de freinage ;
- régler la vitesse et/ou la trajectoire pour éviter une perte de contrôle du véhicule ;
- régler la vitesse et/ou la trajectoire pour éviter une collision avec d'autres véhicules ;
- serrer des ceintures de sécurité ;
- avertir le conducteur ;
- avertir d'autres véhicules.

14. Le système de vision, tel que revendiqué dans l'une quelconque des revendications précédentes, **caractérisé en ce que** le détecteur de glissement (8) est un détecteur de glissement classificateur, conçu pour classer l'état de route dans un état parmi une pluralité d'états de route prédéterminés.

15. Un procédé de vision pour un ego-véhicule à moteur (2), comprenant les étapes suivantes :
- capturer des images (5) à partir d'un environnement (6) du véhicule à moteur (2), et
-- détecter, à l'aide d'un détecteur de véhicule (14), un autre véhicule à moteur (13) dans l'environnement (6) de l'ego-véhicule (2) en traitant les images capturées (5), et
-- détecter un état glissant d'une route (29) devant l'ego-véhicule à moteur (2), au moyen d'un détecteur de glissement (8), **caractérisé par** les étapes suivantes :
- estimer, à l'aide d'un estimateur de mouvement de véhicule (9), le mouvement (11) de l'autre véhicule à moteur (13) sur la base de la sortie (30) du détecteur de véhicule (14), et
- prédire, à l'aide d'un prédicteur de trajectoire (10), une trajectoire à l'état normal (12) de l'autre véhicule à moteur (13) sur la base des images (5) capturées, de la sortie (30) du détecteur de véhicule (14) et/ou d'informations auxiliaires (17), dans lequel une trajectoire à l'état normal est une trajectoire dans l'hypothèse où la route ne serait pas glissante ou ne le serait pas de façon significative ; et
- détecter un état glissant de la route (29) à l'aide du détecteur de glissement (8) sur la base d'une comparaison entre la sortie (11) de l'estimateur de mouvement de véhicule (9) et la sortie (12) du prédicteur de trajectoire (10).
